# EUROPÄISCHE PATENTANMELDUNG

(11) **EP 0 717 388 A1**
(43) Veröffentlichungstag der Anmeldung: **19.06.1996**
(21) Anmeldenummer: 95119812.6
(22) Anmeldetag: 15.12.1995
(51) Int. Cl.: G09F 3/00, G06K 19/02, G08G 1/017

(54) **Zusammensetzung zur delokalisierten Kennzeichnung von Gegenständen, ihre Herstellung und Verwendung**

(30) Priorität: 16.12.1994 DE 4445004
(71) Anmelder: Consortium für elektrochemische Industrie GmbH, D-81379 München (DE)
(72) Erfinder: Hampp, Norbert, Dr., D-35287 Amöneburg-Rossdorf (DE)
(74) Vertreter: Potten, Holger

(57) **Zusammenfassung**

Die Erfindung betrifft eine Zusammensetzung zur delokalisierten Kennzeichnung von Gegenständen, ihre Herstellung und Verwendung.

Die erfindungsgemäße Zusammensetzung ermöglicht eine Kennzeichnung von Gegenständen, die die Fälschung oder unrechtmäßige Verwendung oder Verwertung dieser Gegenstände erschwert. Sie ist dadurch gekennzeichnet, daß sie chemische Elemente mit einer Kα-Linie von 3,69 keV bis 76,315 keV in definierten Verteilungen enthält, wobei die physikalischen Eigenschaften dieser Substanzen bzw. ihre elementare und/oder mengenmäßige Zusammensetzung als delokalisierte, mit dem bloßen Auge nicht erkennbare Information dient.

## Beschreibung

Die Erfindung betrifft eine Zusammensetzung zur delokalisierten Kennzeichnung von Gegenständen, ihre Herstellung und Verwendung.

Zur Kennzeichnung von Fahrzeugen mit dem Ziel, Diebstahl oder unbefugtes Veräußern zu erschweren, ist aus DE-A-34 45 401 bekannt, eine herstellerseitig angebrachte Identifizierungskennzeichnung, welche durch Beaufschlagung mit einer Strahlung und Auswertung der reflektierten Strahlung lesbar ist, so anzubringen, daß sie von einer für sichtbares Licht undurchlässigen Lack-, Farb-, oder Unterbodenschutzschicht abgedeckt ist, durch die hindurch die Strahlung wirkt.

Nachteiligerweise ist es bereits bei geringfügigen Beschädigungen des Fahrzeugs schwierig, das darauf versteckt angebrachte Identifizierungskennzeichen einwandfrei zu lesen, so daß es in diesem Fall zu Fehlern bei der Interpretation des Informationsgehalts kommen kann. Auch die Reparatur eines beschädigten Identifizierungskennzeichens ist nur unter großem Aufwand möglich.

Aufgabe der Erfindung war es, eine Zusammensetzung zur Verfügung zu stellen, welche eine Kennzeichnung von Gegenständen ermöglicht, die ihre Fälschung oder unrechtmäßige Verwendung oder Verwertung erschwert und die genannten Nachteile vermeidet.

Die Aufgabe wird gelöst durch eine Zusammensetzung, die dadurch gekennzeichnet ist, daß sie chemische Elemente mit einer Kα-Linie von 3,69 keV bis 76,315 keV in definierten Verteilungen enthält, wobei die physikalischen Eigenschaften dieser Substanzen bzw ihre elementare und/oder mengenmäßige Zusammensetzung als delokalisierte, mit dem bloßen Auge nicht erkennbare Information dient.

Bei der erfindungsgemäßen Zusammensetzung ist somit eine Information, beispielsweise ein verschlüsselter Zahlencode oder eine Zahlen-Buchstaben-Kombination, in delokalisierter, mit dem bloßen Auge nicht erkennbarer Form gespeichert.

Mittels der erfindungsgemäßen Zusammensetzung lassen sich mindestens 100, vorzugsweise mindestens 10.000, besonders bevorzugt mindestens 1.000.000 verschiedene Informationszustände realisieren.

Die gespeicherte Information läßt sich aus der erfindungsgemäßen Beschichtung mittels nichtinvasiver oder minimal-invasiver Verfahren innerhalb kurzer Zeit mit hoher Fehlersicherheit auslesen.

Ein Gegenstand, der herstellerseitig mit einer erfindungsgemäßen Zusammensetzung beschichtet wurde, ist daher in seiner Herkunft schnell, eindeutig und praktisch fälschungssicher identifizierbar.

Eine Entfernung bzw. eine nachträgliche Modifizierung der erfindungsgemäßen Beschichtung ist technologisch zu aufwendig und steht in der Regel in keinem Verhältnis zu dem Wert des markierten Gegenstandes.

Durch diese Fälschungssicherheit ist bei Gegenständen wie beispielsweise entsprechend lackierten Kraftfahrzeugen die Diebstahlsgefahr geringer. Bei entsprechend lackierten Flugzeugteilen ist der Nachweis von Originalersatzteilen und damit ein Schutz vor Fälschungen bzw. wiederverwendeten oder wiederaufgearbeiteten Ersatzteilen möglich. Die Erfindung umfaßt daher auch Gegenstände, die mit der erfindungsgemäßen Zusammensetzung markiert sind.

Die erfindungsgemäße Zusammensetzung kann direkt auf dem zu kennzeichnenden Gegenstand appliziert werden und somit selbst als Beschichtungsmittel dienen, sie kann aber auch als Zusatz zu allen gebräuchlichen Beschichtungsmitteln eingesetzt werden.

In einer bevorzugten Ausführungsform wird die erfindungsgemäße Zusammensetzung zur Dotierung von Beschichtungsmitteln mit Substanzen, die in dem jeweiligen Beschichtungsmittel nicht oder nur in geringsten, die Codierung nicht beeinträchtigenden Spuren oder in genau bekannten Konzentrationen vorkommen, verwendet.

Die Erfindung umfaßt daher auch Beschichtungsmittel, die mit Substanzen die in dem jeweiligen Beschichtungsmittel nicht oder nur in geringsten Spuren oder in genau bekannten Konzentrationen vorkommen, in jeweils definierten Mengen dotiert sind.

Beispiele für Beschichtungsmittel sind flüssige oder pulverförmige Lacke, Harze, Kunststoffe wie Kunststofffolien, Farben, Glasuren, Email, Glas, oder Klebstoffe.

Vorzugsweise werden als Informationsträger unter den Elemente des Periodensystems mit einer Kα-Linie von 3,69 keV bis 76,315 keV solche ausgewählt, für die Verfahren der Oberflächenanalyse bekannt sind, mit deren Hilfe sie quantitativ nachgewiesen werden können, solche Elemente sind insbesondere nicht ubiquitäre Elemente.

Besonders bevorzugt werden Elemente aus den Nebengruppen oder seltene Hauptgruppenelemente verwendet.

Die Elemente werden in elementarer Form oder in Form beliebiger Verbindungen eingesetzt. Vorzugsweise werden sie in Form einfacher anorganischer oder organischer Verbindungen eingesetzt.

Vorzugsweise handelt es sich bei dem die Information darstellenden Bestandteil der erfindungsgemäßen Zusammensetzung um eine Mischung von Substanzen, wobei diese Mischung definierte chemische Elemente mit einer Kα-Linie von 3,69 keV bis 76,315 keV in solcher Zahl und jeweils spezifischer Menge enthält, daß durch sie eine ausreichende Komplexität, also beispielsweise eine Zahl mit 8 bis 10 Stellen, codiert wird.

Ferner werden als die Information enthaltende Bestandteile vorzugsweise Substanzen verwendet, die eine besondere Stabilität gegenüber Alterungsprozessen aufweisen und die dadurch für einen Einsatz im Freien geeignet sind.

Ferner werden die eingesetzten Substanzen vorzugsweise so ausgewählt, daß sie dem jeweils verwendeten Beschichtungsmittel, beispielsweise einem Standardlack, problemlos zugemischt und mittels üblicher Standardprozesse verarbeitet werden können.

Die eingesetzten Substanzen sollten daher vorzugsweise mit möglichst allen gängigen Lackinhaltsstoffen verträglich sein und die Lack- oder Beschichtungsmitteleigenschaften nicht nachteilig beeinflussen. So sollten die Substanzen beispielsweise keinen Einfluß auf Verarbeitbarkeit, Haltbarkeit insbesondere unter Witterungseinflüssen, oder Verträglichkeit mit Lackpflegemitteln haben.

Ferner ist es vorteilhaft, wenn die eingesetzten Substanzen das Recycling von Gegenständen, die mit der erfindungsgemäßen Zusammensetzung beschichtet wurden, nicht nachteilig beeinflussen.

Es sollte vorteilhafterweise weiter darauf geachtet werden, daß nur solche Substanzen als Informationsträger ausgewählt werden, die nicht von vorne herein bereits im jeweiligen Beschichtungsmittel, im Trägermaterial oder in einer möglicherweise vorhandenen Vorbehandlungsschicht oder Decklackschicht enthalten sind.

Bevorzugt sollten auch keine Substanzen verwendet werden, die in den mit der erfindungsgemäßen Zusammensetzung in Berührung kommenden Teilen des Beschichtungsgerätes vorhanden sind.

Eine erfindungsgemäße Zusammensetzung kann beispielsweise wie folgt hergestellt werden:
Es wird beispielsweise in einer Tabelle festgelegt, welche Konzentration eines ausgewählten Elements ein Informationsdigit repräsentiert. Anschließend werden von den jeweiligen Verbindungen, welche die zur Codierung verwendeten Elemente enthalten, Stammlösungen mit definiertem, möglichst hohem Elementgehalt in dem jeweils erwünschten Beschichtungsmittel, beispielsweise einem Lack, hergestellt. Durch Zugabe der jeweils erwünschten Menge dieser Stammlösungen mit dem jeweils gewünschten Element in definierter Menge wird das Beschichtungsmittel in der jeweils erwünschten Weise codiert.

Zur Auswertung wird die analytisch bestimmte Konzentration mit Hilfe der Tabelle in Zahlenwerte umgerechnet.

Vorzugsweise sollte bei der Auswahl der Elemente, die der Verschlüsselung der Information dienen, darauf geachtet werden, daß diese Elemente weder in dem zu dotierenden Beschichtungsmittel selbst, noch in dem Trägermaterial, welches beschichtet wird, vorhanden sind.

Wenn statt definierter Elemente des Periodensystems definierte Verbindungen als Informationsträger verwendet werden, wird in analoger Weise vorgegangen.

Die erfindungsgemäße Zusammensetzung wird mittels bekannter Beschichtungsverfahren auf den zu kennzeichnenden Gegenstand komplett oder teilweise aufgetragen. Dies geschieht in der Regel in gleicher Weise, wie der Gegenstand bisher beschichtet wurde. Solche Verfahren sind beispielsweise Spritzen, Tauchen, Streichen, Emailieren, Drucken, Bekleben, Sputtern, Bedampfen.

Auch nach dem Auftragen auf den zu kennzeichnenden Gegenstand kann die in der erfindungsgemäßen Zusammensetzung gespeicherte Information selbst im Fall hoher Komplexität schnell detektiert werden. Das Auslesen der Information ist zudem zerstörungsfrei möglich, da es auch bei wiederholtem Detektieren der Information nicht zu einer mit dem bloßen Auge erkennbaren Veränderung der Oberfläche des markierten Gegenstands kommt.

Geeignete Verfahren zur Detektion der Information sind solche Methoden der chemischen oder physikalischen Oberflächenanalyse, welche die Detektion einzelner Elemente in Gemischen und beliebigen chemischen Verbindungen erlauben und die keine oder eine so geringe zu entnehmende Probenmenge erfordern, daß der Ort der Probennahme nach derselben mit bloßem Auge nicht erkennbar ist.

Solche Methoden sind beispielsweise die Atomabsorption (AAS), die Ionenchromatographie (ICP), die Emissionsspektroskopie, die teilcheninduzierte Röntgenemission (PIXE, particle induced x-ray emission), die Laser-induzierte Sekundärionen-Massenspektroskopie (LSIMS), die Röntgenfluoreszenzanalyse (RFA), die Totalreflexions-Röntgenfluoreszenzanalyse (TRFA), die kinetische Röntgenfluoreszenz und Totalreflexions-Röntgenfluoreszenz.

Bevorzugt werden die teilcheninduzierte Röntgenemission (PIXE, particle induced x-ray emission), die Laser-induzierte Sekundärionen- Massenspektroskopie (LSIMS), die Röntgenfluoreszenzanalyse (RFA), die Totalreflexions-Röntgenfluoreszenzanalyse (TRFA), die kinetische Röntgenfluoreszenz und Totalreflexions-Röntgenfluoreszenz eingesetzt.

Besonders bevorzugt sind die Röntgenfluoreszenzanalyse (RFA), die Totalreflexicns-Röntgenfluoreszenzanalyse (TRFA), die kinetische Röntgenfluoreszenz und Totaireflexions-Röntgenfluoreszenz.

Bei den Röntgenverfahren wird die codierte Information durch Analyse der inneren Elektronenschalen der Elemente bestimmt. Der Vorteil dieser Detektionsmethode ist, daß eine chemische Veränderung der Elemente infolge ihrer chemischen Bindungen in den eingesetzten Verbindung nicht zu einer Änderung der detektierten Information führt, da die inneren Elektronenschalen nicht an der chemischen Bindung teilnehmen.

Schon in einfachen Ausführungsformen, d.h. der Messung der Röntgenfluoreszenz nach Anregung mit einer Strahlungswellenlänge, wird ein Beobachtungsfenster von 15 keV erreicht. Da die Breite einer Linie bei weniger als 0,5 keV liegt, ist offensichtlich, daß eine Vielzahl von Informationspositionen zur Verfügung stehen. Jede Informationsposition entspricht dabei einem chemischen Element. An jeder der einzelnen Informationspositionen läßt sich anhand der unterschiedlichen Konzentrationen der Elemente, die in Form von unterschiedlichen Grauwerten gemessen werden, abgestufte Information speichern. Bereits bei dem genannten Beobachtungsfenster stehen somit theoretisch bis zu 30 Positionen zur Informationsspeicherung zur Verfügung. Es ließe sich in dieser Ausführungsform daher eine bis zu 30-stellige Zahl verschlüsseln.

Die Codierung der Information kann beispielsweise so erfolgen, daß ein bestimmtes Element oder eine bestimmte chemische Verbindung eine bestimmte Stelle einer mehrstelligen Zahl oder einer Buchstaben-Zahlen-Kombination darstellt. Die Konzentration des Elementes oder der chemischen Verbindung kann hierbei den Wert der Ziffer oder den Buchstaben ausdrücken. Ist ein bestimmtes Element oder eine bestimmte chemische Verbindung, die dem Codierungssatz angehört, nicht in der Zusammensetzung enthalten, so entspricht dies dem Wert Null.

Prinzipiell ist die erfindungsgemäße Zusammensetzung zur Kennzeichnung von beliebigen Gegenständen geeignet. So lassen sich mittels der erfindungsgemäßen Zusammensetzung beispielsweise Gegenstände wie Kraftfahrzeuge, Original- und Ersatzteile in der Kfz- oder Luftfahrtindustrie, Dokumente, Wertpapiere, Stempelfarben, Siegel, Waffen, Scheckkarten oder Wertgegenstände wie z.B. Kunstgegenstände jeglicher Art kennzeichnen.

Die Erfindung betrifft daher auch die genannten Gegenstände, soweit sie mit einer erfindungsgemäßen Zusammensetzung markiert sind.

In Fig. 1 ist das Totalreflexionsspektrum eines mit der Lackmischung aus Beispiel 1 beschichteten Bleches zu sehen. Die mit ihren Elementbezeichnungen markierten Peaks (Ba, Fe, Sr, Pb) sind nicht zur Codierung eingesetzt worden, sondern inherente Bestandteile der Lackgrundlage.

Fig. 2 erhält man aus Fig. 1, wenn man die nicht-codierenden Peaks aus dem Spektrum entfernt und den Untergrund subtrahiert. Die einzelnen Elemente sind mit ihren chemischen Symbolen bezeichnet. Die aus diesem Spektrum gewonnenen Daten werden zur Auswertung herangezogen.

Fig. 3 zeigt das Totalreflexionsspektrum eines entsprechend Beispiel 4 beschichteten Bleches.

Die folgenden Beispiele dienen der weiteren Erläuterung der Erfindung.

### Beispiel 1: Herstellung eines erfindungsgemäßen Lacks, der als codierte Information die Zahl 443358A43 trägt. Der Buchstabe "A" ist gleichbedeutend mit dem Ziffernwert 10.

Es wurden Stammlösungen mit möglichst hohem Gehalt an je einem Metall hergestellt. Dazu wurden Acetylacetonate der Elemente Ga, Cu, Ni, Sc, Y, Eu, Ho, Nd, und Rubidiumacetat jeweils einzeln in einem Acrylat-Klarlack FF 76-0122 11, erhältlich unter der Bezeichnung 1K-High-Solid-Klarlack farblos, bei BASF L. + F. AG, 48136 Münster, unter Rühren gelöst. Begrenzt durch die unterschiedliche Löslichkeit betrug der Elementgehalt zwischen 700 und 1000 ppm.

Diese Stammlösungen wurden auf ihre Metallgehalte mittels Atomabsorptionsspektroskopie untersucht. Der Massenanteil an flüchtigen Lösungsmitteln betrug 50 %. Daraus folgt, daß sich die Metallkonzentration der Lackschicht beim Trocknen verdoppelt.

Um die Codierung vorzunehmen, wurde eine Codierungstabelle erstellt, die erstens jedem Element die zu codierende Position in der Zahl zuweist, und die zweitens festlegt, welche Konzentration des jeweiligen Elementes einem digit in der zugeordneten Stelle entspricht. Es wurde eine Anordnung der Elemente entsprechend ihrer im Röntgenfluoreszenzspektrum beobachtbaren Linien gewählt, d.h. die höchstwertige Stelle entspricht Scandium (Sc) und die niedrigstwertige Stelle entspricht Yttrium (Y). Für die Elemente Scandium (Sc), Neodym (Nd), Europium (Eu), Holmium (Ho) wurde jeweils 100ppm pro digit gewählt, für die übrigen Elemente wurde 10 ppm pro digit festgelegt.

Zur Mischung von 1 kg des gewünschten Lackes werden die einzelnen Stammlösungen in den in Tabelle 1 berechneten Mengen eingewogen und mit Klarlack auf 1 kg aufgefüllt.

**Tabelle 1**

| Zuordnung der Elemente zu den Stellen der zu codierenden Zahl | Sc | Nd | Eu | Ho | Ni | Cu | Ga | Rb | Y |
|---|---|---|---|---|---|---|---|---|---|
| Konz. Stammlösung (ppm). gemessen mit AAS | 895 | 863 | 733 | 986 | 930 | 1000 | 936 | 1000 | 988 |
| Codierungskonzentration (ppm/digit) bezogen auf trockenen Lack | 100 | 100 | 100 | 100 | 10 | 10 | 10 | 10 | 10 |
| Massenanteil d. Lösungsmittels | 0,5 | 0,5 | 0,5 | 0,5 | 0,5 | 0,5 | 0,5 | 0,5 | 0,5 |
| zu codierende Zahl | 4 | 4 | 3 | 3 | 5 | 8 | 10 | 4 | 3 |
| zu dosierende Menge in Gramm pro kg flüssigem Lack (g) | 223,46 | 231,75 | 204,64 | 155,28 | 26,88 | 40,00 | 53,42 | 20,00 | 15,18 |
| Summe aller dotierten Lackmengen: 970,61 g. Es muß also mit 29,39 g Klarlack auf 1 kg codierten Lack aufgefüllt werden. | | | | | | | | | |

Der fertig gemischte codierte Lack wurde mit 20 % Lösungsmittel zur besseren Verarbeitbarkeit verdünnt und mit einer Spritzpistole in dünner, homogener Schicht auf Bleche mit einer Fläche von 20 x 25 cm aufgetragen. Die Bleche trugen bereits eine Phosphatierungsschicht (25 µm) und eine Füllgrundierungsschicht (75-85 µm). Sie wurden vor dem Spritzen mit Ethanol gereinigt. Nach dem Spritzen wurden die Bleche im Trockenschrank 1 h bei 80°C und anschließend 30 min. bei 130°C getrocknet.

### Beispiel 2: Auslesen der kodierten Information aus einem beschichteten Blech

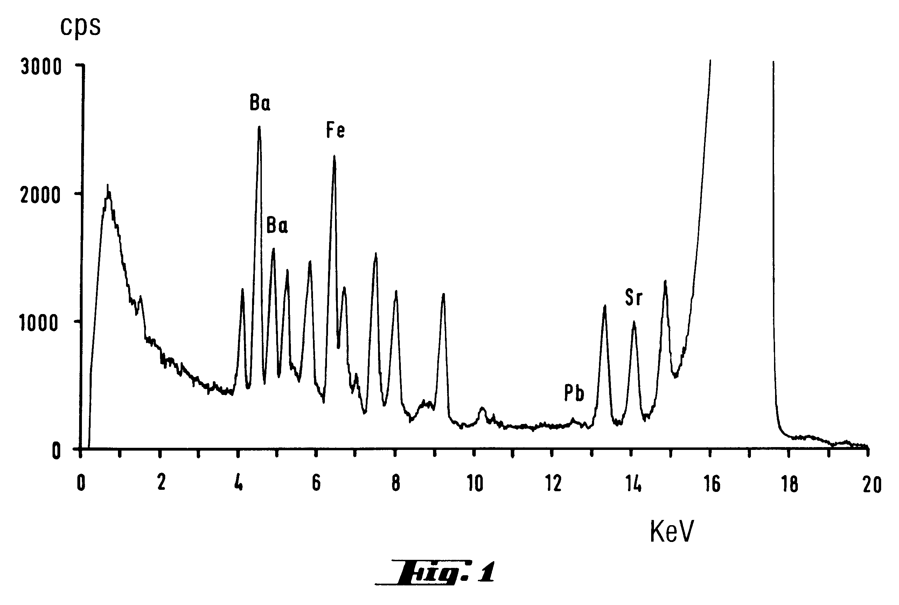

Die zerstörungsfreie Analyse des gemäß Beispiel 1 beschichteten Blechs erfolgte mittels Totalreflexions-Röntgenfluoreszenzanalyse (TRFA) mit einem TRF-Spektrometer Modell TXRF 8010 der Firma Atomika Instruments GmbH (85764 Oberschleißheim) (Fig.1).

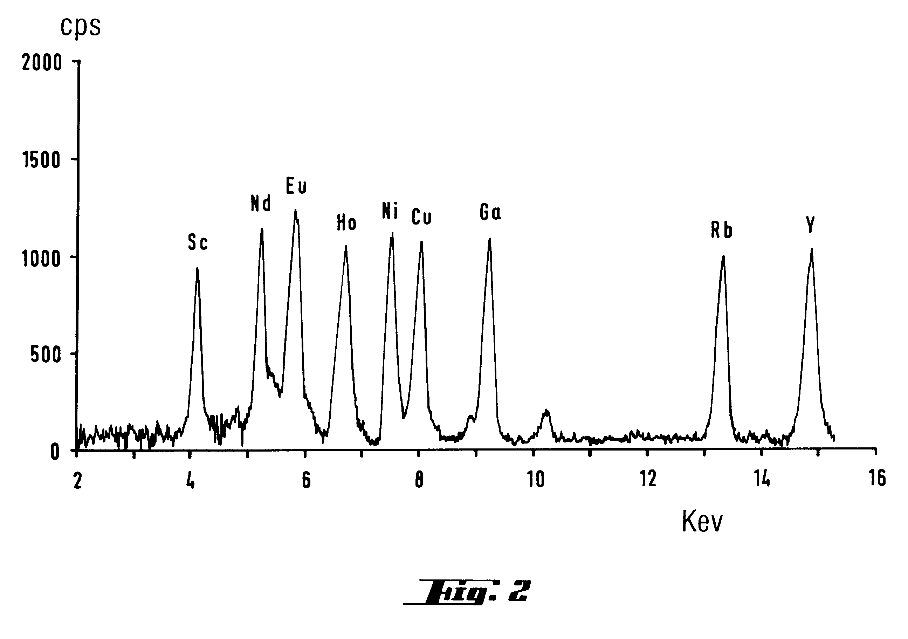

Zur Auswertung des Spektrums wurde der Streuanteil numerisch subtrahiert. Zusätzlich wurden die Peaks der nicht zur Codierung zugesetzten Elemente (Fe, Ba, Sr) durch Subtraktion entsprechend angepaßter Gauß-Kurven aus den Spektren entfernt. Durch diese Operation erhält man Fig. 2. Die Halbhöhenbreiten der Peaks betrugen einheitlich 0,22 keV, unabhängig vom jeweiligen Element. Deshalb können sowohl die Peakhöhen als auch die Peakflächen zur Konzentrationsbestimmung herangezogen werden.

Aus der Höhe der codierenden Elementpeaks, gemessen in cps (counts per second) und deren Halbwertsbreite von einheitlich 0,22 keV wurden die Flächen der codierenden Elementpeaks berechnet. Für jedes Element wurde unabhängig der Empfindlichkeitsfaktor bestimmt, der von der verwendeten Matrix, d.h. hier der Klarlack Lackgrundlage, und gerätespezifischen Faktoren, z.B. Anregungsröntgenröhre und Detektorcharakteristika, abhängt. Nach Multiplikation der Flächen der Elementpeaks erhält man so die in der Lackbeschichtung nachweisbare Konzentration der einzelnen Elemente. Wendet man auf diese wieder die Codierungstabelle an, die bei der Herstellung benutzt wurde (siehe Beispiel 1), ergeben sich Zahlen, die nach Rundung auf ihren ganzzahligen Wert die codierte Information ergeben. Dieser Vorgang ist in Tabelle 2 dargestellt.

**Tabelle 2**

| | Sc | Nd | Eu | Ho | Ni | Cu | Ga | Rb | Y |
|---|---|---|---|---|---|---|---|---|---|
| Höhe des Elementpeaks (cps) | 902 | 1097 | 1195 | 1024 | 1023 | 1068 | 1048 | 975 | 1000 |
| Halbwertsbreite des Elementpeaks (keV) | 0,22 | 0,22 | 0,22 | 0,22 | 0,22 | 0,22 | 0,22 | 0,22 | 0,22 |
| Fläche der Elementpeaks (cps*keV) | 198,44 | 241,34 | 262,9 | 225,28 | 225,06 | 234,96 | 230,56 | 214,5 | 220 |
| matrixabhängiger Empfindlichkeitsfaktor (ppm/Fläche) | 2,110 | 1,820 | 1,040 | 1,360 | 0,230 | 0,330 | 0,435 | 0,180 | 0,135 |
| Gemessene Konzentration (ppm) | 418,71 | 439,24 | 273,42 | 306,38 | 51,76 | 77,54 | 100,29 | 38,61 | 29,70 |
| Codierungskonzentration (ppm/digit) bezogen auf trockenen Lack | 100 | 100 | 100 | 100 | 10 | 10 | 10 | 10 | 10 |
| Decodierte Zahl | 4,187 | 4,392 | 2,73 | 3,063 | 5,176 | 7,753 | 10,036 | 3,861 | 2,97 |
| Decodierte Zahl gerundet | 4 | 4 | 3 | 3 | 5 | 8 | 10 | 4 | 3 |

### Beispiel 3: Variabilität der Codierungstabellen als zusätzliches Sicherheitsmerkmal

In den Tabellen 1 und 2 ist eine mögliche Codierungs-/Decodierungstabelle angewandt worden. Eine Codierungstabelle enthält folgende Informationen:
1. Zahl der Elemente bzw. Zahl der Stellen der codierten Information
2. Zuordnung der Elemente zu den Stellen der zu codierenden Zahl
3. die angewandte Konzentrationsstufung (ppm/digit)
Alle drei Informationen müssen für einen potentiellen Mißbrauch, d.h. Umgehung oder Fälschung des Sicherungssystems, zusätzlich bekannt sein. Da diese Informationen vorzugsweise getrennt von den erfindungsgemäßen Beschichtungszusammensetzungen gehandhabt wird, ist dadurch ein zusätzliches Sicherheitselement gegeben.

In Tabelle 3 ist gezeigt, wie die Auswertung des Spektrums in Beispiel 2 (siehe auch Fig. 1 und Fig. 2) unter Anwendung einer anderen Codierungstabelle zu einem gänzlich verschiedenen Ergebnis führt.

Die Codierungstabelle unterscheidet sich von der aus Beispiel 2 dadurch, daß erstens die Zuordnung der Elemente zu den einzelnen Stellen der codierten Information anders gewählt wurde (hier alphabetisch) und zweitens die verwendete Konzentrationsstufung in den einzelnen Stellen (ppm/digit) verschieden ist.

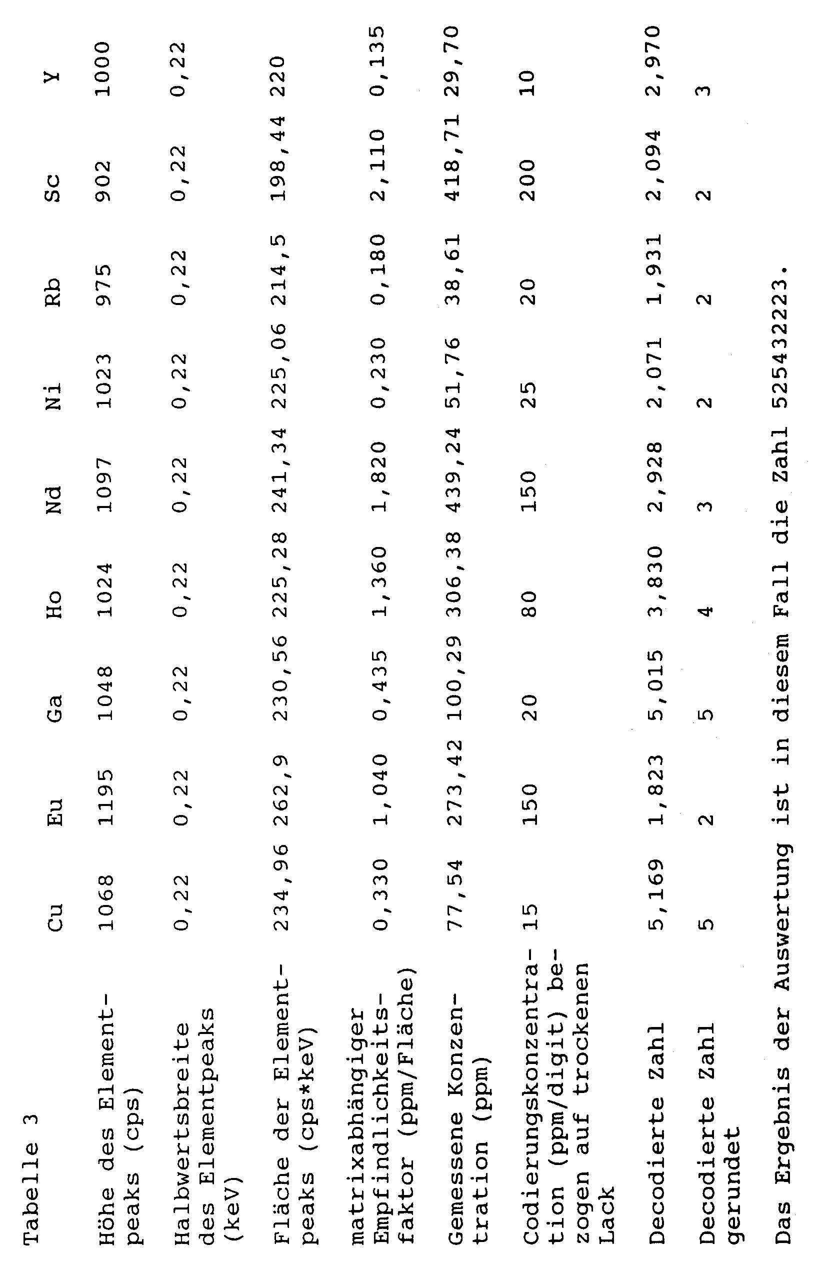

### Beispiel 4: Codierung einer anderen Information

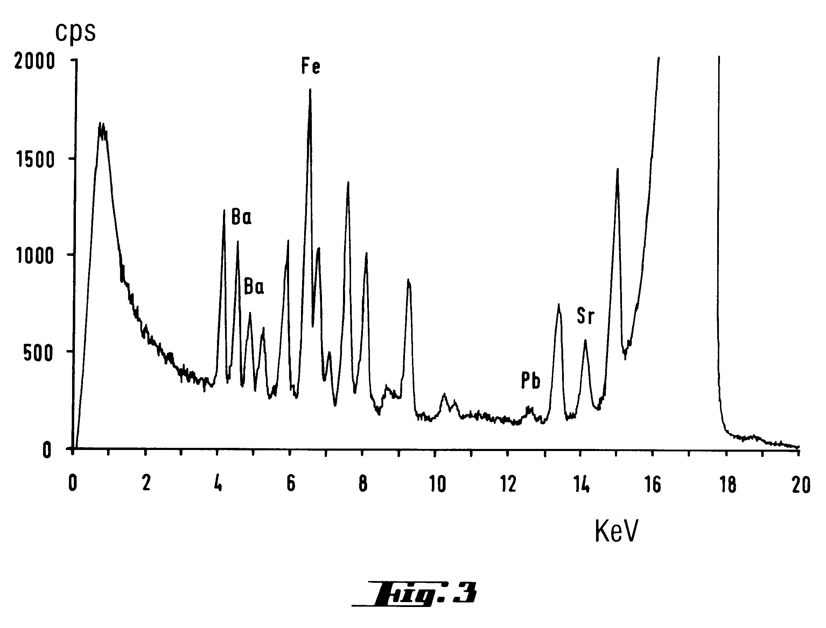

In Fig. 3 ist ein Röntgentotalreflektionsspektrum zu sehen, das die gleichen Elemente, enthält wie Beispiel 2. Analog Beispiel 1 wurde die Zahl 314313123 verschlüsselt. Analog Beispiel 2 wurde die Information ermittelt. Die zugehörige Codierungs- / Decodierungstabelle ist aus Tabelle 4 ersichtlich.

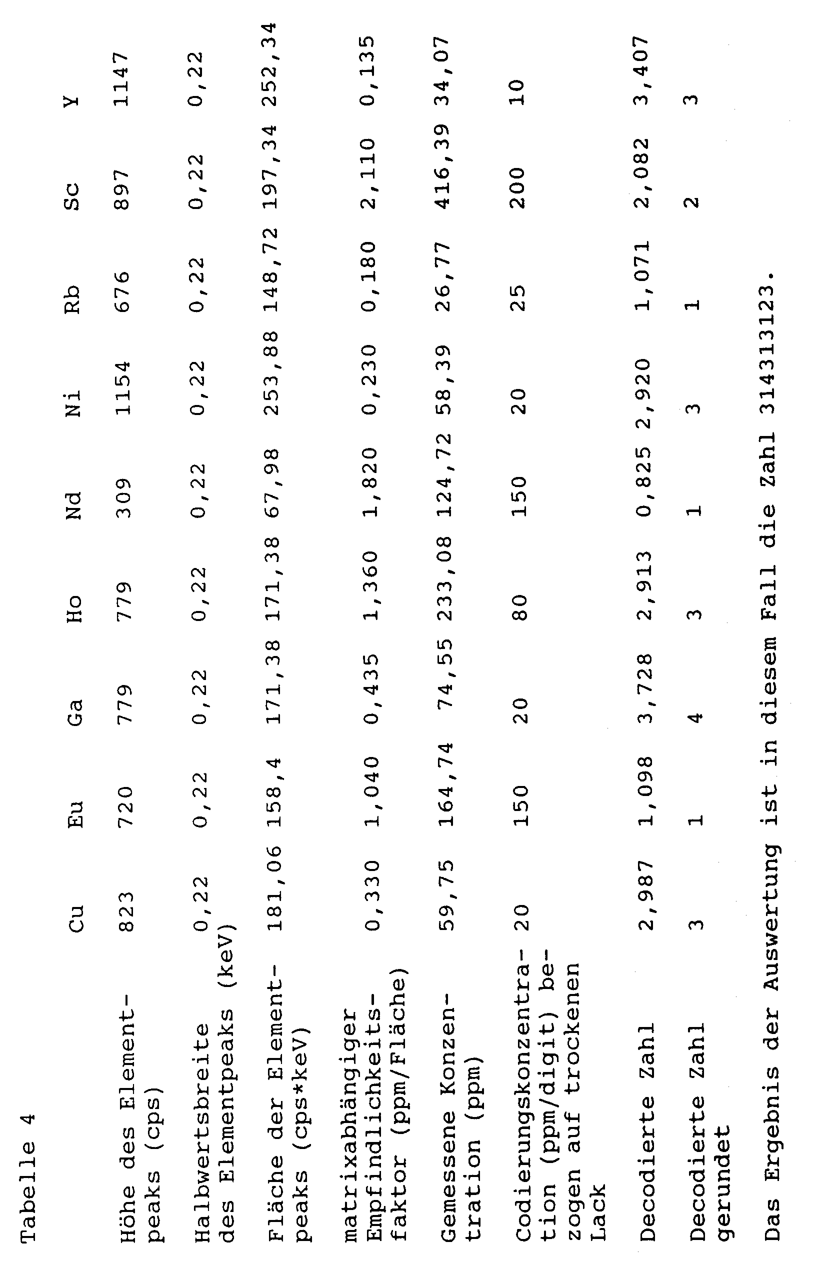

## Patentansprüche

1. Zusammensetzung, die eine Kennzeichnung von Gegenständen ermöglicht, die die Fälschung oder unrechtmäßige Verwendung oder Verwertung dieser Gegenstände erschwert, dadurch gekennzeichnet, daß sie chemische Elemente mit einer Kα-Linie von 3,69 keV bis 76,315 keV in definierten Verteilungen enthält, wobei die physikalischen Eigenschaften dieser Substanzen bzw. ihre elementare und/oder mengenmäßige Zusammensetzung als delokalisierte, mit dem bloßen Auge nicht erkennbare Information dient.

2. Zusammensetzung nach Anspruch 1, dadurch gekennzeichnet, daß als definierte Substanzen deren physikalische Eigenschaften bzw. elementare und/oder mengenmäßige Zusammensetzung Information darstellen, Substanzen verwendet werden, die eine besondere Stabilität gegenüber Alterungsprozessen aufweisen und die dadurch für einen Einsatz im Freien geeignet sind.

3. Zusammensetzung nach Anspruch 1 oder 2, dadurch gekennzeichnet, daß sie eine Realisierung von mindestens 100 verschiedenen Informationszuständen ermöglicht.

4. Zusammensetzung nach Anspruch 1 oder 2, dadurch gekennzeichnet, daß sie eine Realisierung von mindestens 10000 verschiedenen Informationszuständen ermöglicht.

5. Zusammensetzung nach einem oder mehreren der Ansprüche 1 bis 4, dadurch gekennzeichnet, daß sich die gespeicherte Information mittels nichtinvasiver oder minimalinvasiver Verfahren auslesen läßt.

6. Zusammensetzung nach einem oder mehreren der Ansprüche 1 bis 5, dadurch gekennzeichnet, daß Elemente ausgewählt werden, die nicht von vorne herein bereits im jeweiligen Beschichtungsmittel, im Trägermaterial oder in einer möglicherweise vorhandenen Vorbehandlungsschicht oder einem Decklack enthalten sind.

7. Verfahren zur Herstellung von Zusammensetzungen gemäß einem oder mehreren der Ansprüche 1 bis 6, dadurch gekennzeichnet, daß zunächst von den jeweiligen Verbindungen, welche die zur Codierung vorgesehenen Elemente enthalten, Stammlösungen mit definiertem, möglichst hohem Elementgehalt in dem jeweils erwünschten Beschichtungsmittel hergestellt werden und später durch Zugabe jeweils erwünschter Mengen dieser Stammlösungen mit den jeweils gewünschten Elementen das Beschichtungsmittel in der jeweils erwünschten Weise codiert wird.

8. Gegenstand der mit mindestens einer Zusammensetzung gemäß einem oder mehreren der Ansprüche 1 bis 6 markiert ist.

9. Verwendung von Zusammensetzungen gemäß einem oder mehreren der Ansprüche 1 bis 6 zur Kennzeichnung von Kraftfahrzeugen, Original- oder Ersatzteilen in der Kfz- oder Luftfahrtindustrie, Dokumenten, Wertpapieren, Stempelfarben, Siegeln, Waffen, Scheckkarten oder Wertgegenständen wie z.B.Kunstgegenständen jeglicher Art.
